# EUROPEAN PATENT APPLICATION

(11) **EP 1 811 708 A1**
(43) Date of publication of application: **25.07.2007**
(21) Application number: 07001019.4
(22) Date of filing: 18.01.2007
(51) Int. Cl.: H04L 1/00

(54) **Apparatus and method for processing input/output data in communication system**

(30) Priority: 18.01.2006 KR 20060005406
(71) Applicant: Samsung Electronics Co., Ltd., Suwon-si Gyeonggi-do (KR)
(72) Inventor: Park, Dong-Wook, Yeongtong-gu Suwon-si Gyeonggi-do (KR); Lee, Hyun-Bae, Yeongtong-gu Suwon-si Gyeonggi-do (KR); Park, Weon-Heum, Yeongtong-gu Suwon-si Gyeonggi-do (KR); Gil, Gang-Mi, Yeongtong-gu Suwon-si Gyeonggi-do (KR); Yu, Hyun-Seok, Yeongtong-gu Suwon-si Gyeonggi-do (KR)
(74) Representative: Lang, Johannes

(57) **Abstract**

An apparatus and method for processing input/output data in a communication system is disclosed. By adding a controller that adjusts timing intervals between a first buffer having a first timing interval and a second buffer having a second timing interval, buffer usage can be minimized.

## Description

### BACKGROUND OF THE INVENTION

### 1. Field of the Invention

The present invention generally relates to an apparatus and method for processing input/output data in a communication system, and in particular, to a transport channel demultiplexer and a demultiplexing method for a Wideband Code Division Multiple Access (WCDMA) system.

### 2. Description of the Related Art

Generally, a Universal Mobile Telecommunications System (UMTS) transport channel demultiplexer performs column-permutation on data that has been written by a transmitter in a transport channel buffer in the row direction and then reads the column-permutated data in the column direction, whereby primary interleaving is automatically performed.

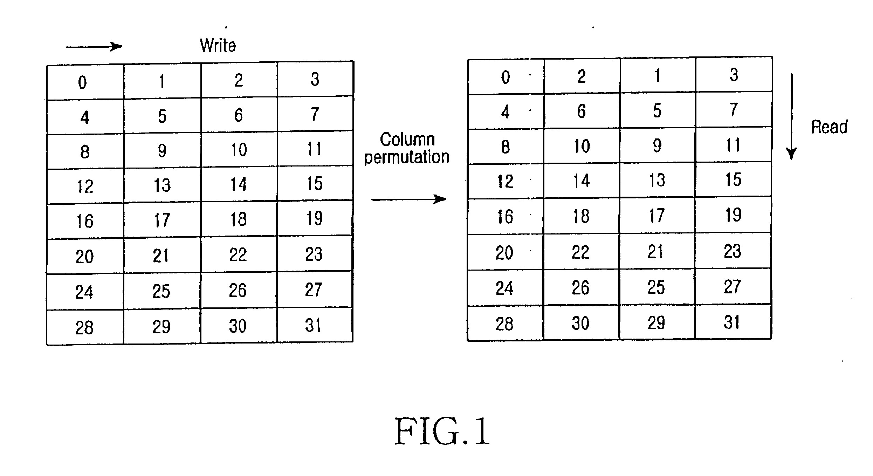

FIG. 1 illustrates a general example of primary interleaving, i.e., column permutation in which columns of data that has been rate-matched by a transmitter are exchanged.

In FIG. 1, a Transmission Timing Interval (TTI) is assumed to be 40ms and the number of frames per TTI is defined as a parameter N_TTI that is assumed to be 4. After primary interleaving, data is output sequentially along a direction indicated by a 'READ' arrow as illustrated in FIG. 1. The output data per frame undergoes secondary interleaving and then is transmitted to a receiver. The receiver then performs secondary deinterleaving on frame data received every 10ms while storing the deinterleaved frame data in a Radio Frequency (RF) buffer.

Referring to FIG. 1, for the data that is transmitted to the receiver after the secondary interleaving, a first 10ms frame includes data (0, 4, 8, 12, 16, 20, 24, 28), a second 10ms frame includes data (2, 6, 10, 14, 18, 22, 26, 30), a third 10ms frame includes data (1, 5, 9, 13, 17, 21, 25, 29), and a fourth 10ms frame includes data (3, 7, 11, 15, 19, 23, 27, 31). Thus, these 10ms frames are by turns stored in and output from the RF buffer of the receiver, which is configured as a double buffer.

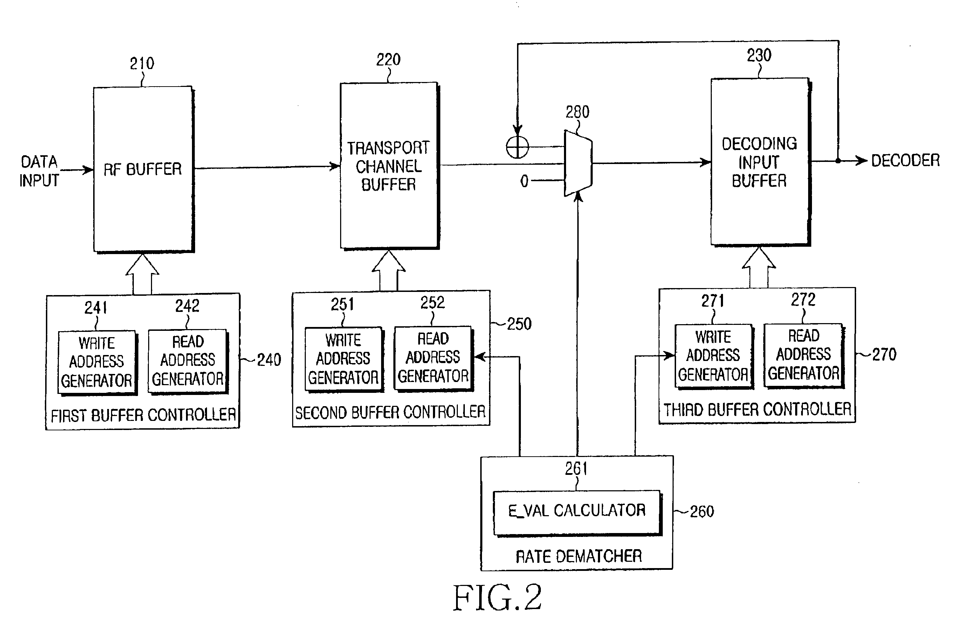

FIG. 2 is a block diagram of a general transport channel demultiplexer of the receiver.

As illustrated in FIG. 2, in the receiver, data stored in an RF buffer 210 is sequentially read and then written in a position corresponding to an address generated by a write address generator 251 of a second buffer controller 250 in a transport channel buffer 220 in the column direction. To this end, the write address generator 251 of the second buffer controller 250 generates an address that is incremented by N_TTI=4 at a time. A read address generator 252 of the second buffer controller 250 sequentially increments a read address after completion of the write operation, whereby primary deinterleaving is finished.

A rate dematching process in the receiver may be classified into no rate control, zero insertion for convolutionally coded data, zero insertion for turbo coded data, and reduction.

For convenience of explanation, zero insertion for convolutionally coded data and reduction will be described.

Data that has been punctured in the transmitter is adjusted by zero insertion. Reduction involves combining data that has been repeated during rate matching of the transmitter.

More specifically, data of the transport channel buffer 220 illustrated in FIG. 2 is sequentially read, and a rate dematching algorithm is executed for each read data in order to cause an E_val calculator 261 of rate dematcher 260 to calculate a parameter E_val used for zero insertion or data combining through multiplexer 280. In zero insertion and reduction, the read address generator 252 of the second buffer controller 250 and a write address generator 271 of a third buffer controller 270 operate based on E_val calculated by the E_val calculator 261.

In zero insertion, for E_val>0, the read data is written in a position corresponding to a write address of a decoding input buffer 230 and the write address of the decoding input buffer 230 and a read address of the transport channel buffer 220 are incremented, while for E<=0, '0' is written in the position corresponding to the write address of the decoding input buffer 230 and then the write address of the decoding input buffer 230 is incremented.

In reduction, for E_val>0, the read data is written in the position corresponding to the write address of the decoding input buffer 230 and the write address of the decoding input buffer 230 and the read address of the transport channel buffer 220 are incremented, while for E_val<=0, the read address of the transport channel buffer 220 is incremented and then data combining is performed in the position corresponding to the write address of the decoding input buffer 230.

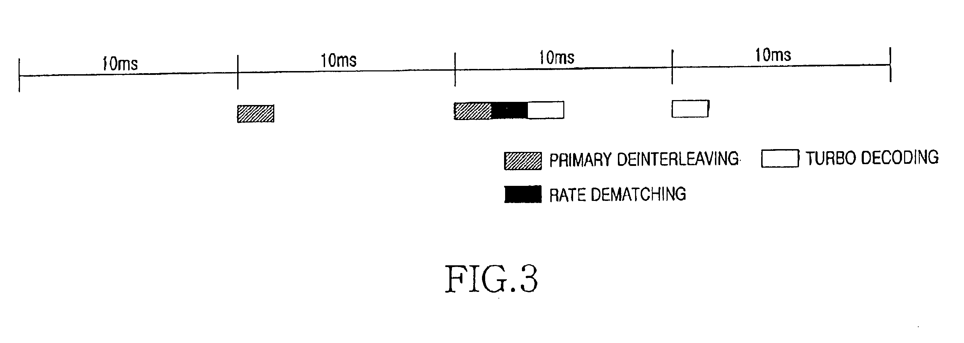

FIG. 3 is a timing diagram for primary deinterleaving, rate dematching, and decoding for a single transport channel having TTI=40ms.

As illustrated in FIG. 3, for a single transport channel having TTI=40ms, primary deinterleaving is performed every 10ms and rate dematching and decoding are performed every TTI.

As discussed above, in the general transport channel demultiplexer of the receiver, since primary deinterleaving is performed every 10ms and rate dematching and decoding are performed every TTI, a transport channel buffer is required for storing data that undergoes primary deinterleaving. The size of the transport channel buffer used to store the data is about 0.2 million gate count, increasing an area and power consumption.

### SUMMARY OF THE INVENTION

An object of the present invention is to address at least the above problems and/or disadvantages and to provide at least the advantages described below. Accordingly, an object of the present invention is to provide an apparatus and method for controlling data input/output operations by adding a simple controller between two buffers having different timing intervals.

Another object of the present invention is to provide a demultiplexer and a demultiplexing method, in which primary deinterleaving and rate dematching are performed at the same time by adding a controller between two buffers having different timing intervals.

According to one aspect of the present invention, there is provided a transport channel demultiplexer for a Wideband Code Division Multiple Access (WCDMA) system. The transport channel demultiplexer includes a Radio Frequency (RF) buffer for storing radio frame data that is transmitted every first timing interval, a rate dematching processor for performing rate dematching with respect to output data of the RF buffer, a decoding input buffer whose output terminal is connected to an input terminal of a decoder and for deinterleaving and then storing data that is processed by the rate dematching processor and then input every second timing interval that is greater by an integer_multiple than the first timing interval and outputting the stored data to the decoder, and a controller for defining a counter according to the second timing interval and detecting data every first timing interval and then transmitting the detected data to the rate dematching processor.

According to another aspect of the present invention, there is provided a demultiplexing method of a transport channel demultiplexer for a Wideband Code Division Multiple Access (WCDMA) system. The demultiplexing method includes storing radio frame data that is transmitted every first timing interval after performing secondary deinterleaving with respect to the radio frame data, performing rate dematching with respect to the stored radio frame data, receiving the rate-dematched radio frame data every second timing interval that is greater by an integer multiple than the first timing interval, performing primary deinterleaving with respect to the received radio frame data, and storing the primary-deinterleaved radio frame data, and outputting the primary-deinterleaved radio frame data to a decoder.

### BRIEF DESCRIPTION OF THE DRAWINGS

The above and other features and advantages of an exemplary embodiment of the present invention will be more apparent from the following detailed description taken in conjunction with the accompanying drawings, in which:
FIG. 1 illustrates general column permutation with respect to data that has been rate-matched by a transmitter;
FIG. 2 is a block diagram of a general transport channel demultiplexer of a receiver;
FIG. 3 is a timing diagram for primary deinterleaving, rate dematching, and decoding for a single transport channel having TTI=40ms;
FIG. 4 is a block diagram of a transport channel demultiplexer of a receiver according to the present invention;
FIG. 5 is a timing diagram for primary deinterleaving, rate dematching, and decoding according to of the present invention;
FIG. 6 is a timing diagram for zero insertion in case of TTI=40ms according to the present invention;
FIG. 7 is a flowchart illustrating zero insertion according to the present invention;
FIG. 8 is a timing diagram illustrating an operation for TTI=40ms and a first radio frame according to the present invention;
FIG. 9 is a flowchart illustrating an operation for TTI=40ms and a first radio frame according to the present invention;
FIG. 10 is a timing diagram illustrating an operation for TTI=40ms and a radio frame following a first radio frame according to the present invention;
FIG. 11 is a flowchart illustrating an operation for TTI=40ms and a radio frame following a first radio frame according to the present invention;
FIG. 12 is a timing diagram illustrating an operation for TTI=10ms according to the present invention; and
FIG. 13 is a flowchart illustrating an operation for TTI=10ms according to the present invention.

### DETAILED DESCRIPTION OF THE PREFERRED EMBODIMENT

The following detailed construction and elements are provided to assist in a comprehensive understanding of the invention. Accordingly, those of ordinary skill in the art will recognize that various changes and modifications of the embodiment described herein can be made without departing from the scope and spirit of the invention. Also, descriptions of well-known functions and constructions are omitted for clarity and conciseness and like reference numerals refer to like features throughout the specification.

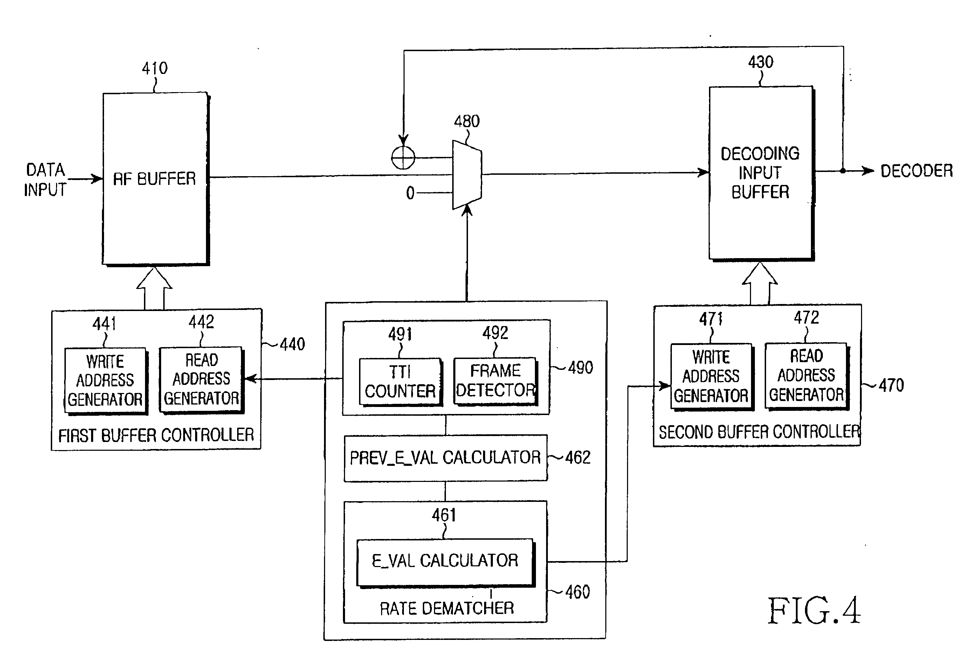

FIG. 4 is a block diagram of a transport channel demultiplexer of a receiver for efficient buffer usage according to the present invention.

As illustrated in FIG. 4, the transport channel demultiplexer includes a Radio Frequency (RF) buffer 410, a decoding input buffer 430, a first buffer controller 440, a rate dematcher 460, a second buffer controller 470, a multiplexer 480, and a controller 490.

The RF buffer 410 stores radio frame data. The multiplexer 480 inserts a zero into data that is output from the RF buffer 410, combines data, or stores the output data of the RF buffer 410 in the decoding input buffer 430 according to the control of the rate dematcher 460. The decoding input buffer 430 performs primary deinterleaving and rate dematching with respect to input data and stores the resulting data.

The rate dematcher 460 executes a rate dematching algorithm and includes an E_val calculator 461 for calculating E_val. E_val is a parameter for generating a rate dematching pattern used for a general rate dematching algorithm. The controller 490 includes a TTI counter 491 that increments a count separately for each TTI and a frame detector 492 that detects frame data. A Prev_E_val calculator 462 is connected between the controller 490 and the rate dematcher 460 in order to calculate Prev_E_val by delaying E_val by 1 clock.

The first buffer controller 440 includes a write address generator 441 that generates a write address for secondary deinterleaving and a read address generator 442 that generates a read address of the RF buffer 410 using the output value of the TTI counter 491. Similarly, the second buffer controller 470 includes a write address generator 471 and a read address generator 472. The write address generator 471 generates a write address of the decoding input buffer 430 according to E_val generated by the rate dematching algorithm.

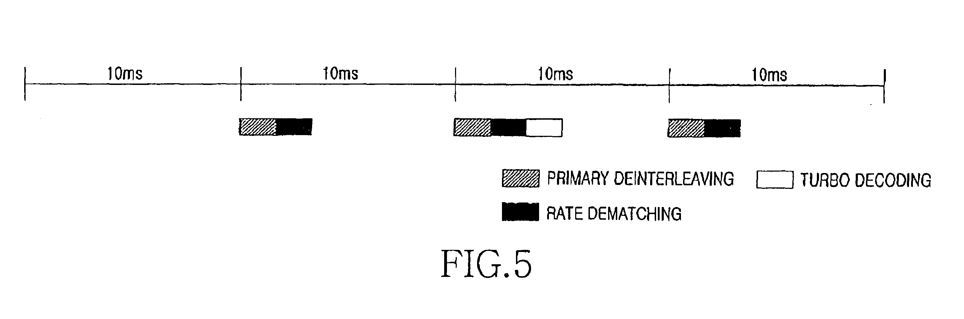

Conventionally, as illustrated in FIGs. 2 and 3, data is primary-deinterleaved every 10ms and then stored in a transport channel buffer, and the stored data is rate-dematched every TTI and then stored in a decoding input buffer. However, in the present invention, data stored in the RF buffer 410 undergoes primary deinterleaving and rate dematching at the same time every 10ms and then is stored in the decoding input buffer 430. FIG. 5 is a timing diagram for primary deinterleaving, rate dematching, and decoding according to the present invention.

Hereinafter, primary deinterleaving and rate dematching according to the present invention will be described in detail with reference to the drawings. Separate descriptions will be made regarding a case where primary deinterleaving and zero insertion are performed and a case where primary deinterleaving and data combining are performed.

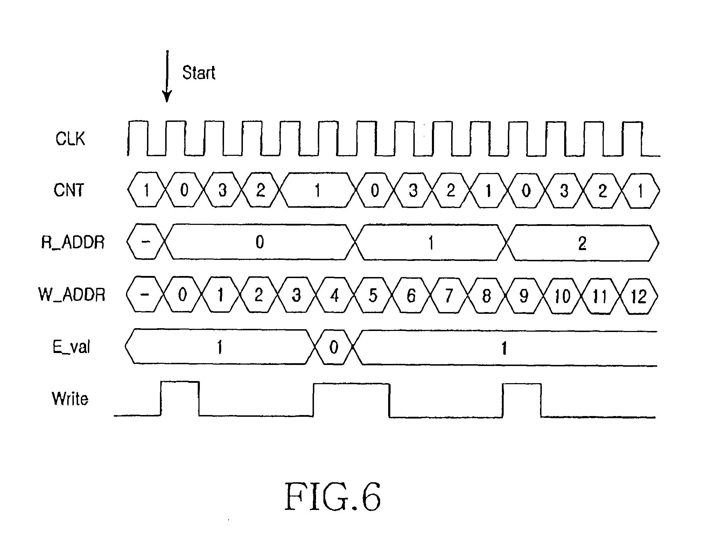

FIG. 6 is a timing diagram for zero insertion in case of TTI=40ms according to the present invention.

As illustrated in FIG. 6, an output value CNT of the TTI counter 491 illustrated in FIG. 4 is output every clock CLK. When E_val generated by the rate dematching algorithm is greater than 0, '0', '3', '2', and '1' are repetitively output as CNT. When E_val generated by the rate dematching algorithm is less than or equal to 0, an immediately previous value is maintained. A read address R_ADDR generated by the read address generator 442 of the first buffer controller 440 is incremented each time CNT=0. A write address W_ADDR generated by the write address generator 471 of the second buffer controller 470 is incremented every clock.

As mentioned previously, the write address is incremented every clock, but a write signal WRITE indicating the execution of a write operation in the decoding input buffer 430 is enabled only when CNT=0 or E_val<=0, i.e., E_val=0.

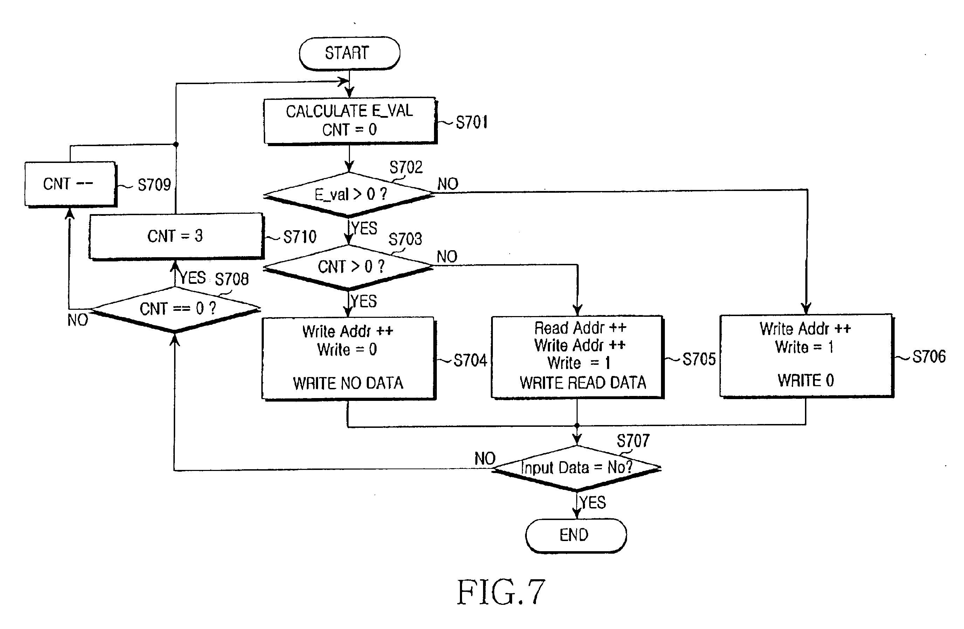

FIG. 7 is a flowchart illustrating zero insertion in case of TTI=40ms according to the present invention.

As illustrated in FIG. 7, in zero insertion, E_val is calculated after CNT is set to 0 in step S701. In step S702, E_val is checked. For E_val>0, CNT is checked in step S703. For CNT>0, the write address is incremented and the write signal is set to 0 in step S704. In case of CNT<=0, data that has been read from the RF buffer 410 is written in the decoding input buffer 430 after the write address and the read address are incremented and the write signal is set to 1, in step S705.

If E_val<=0 in step S702, CNT>0 at all times and thus CNT does not need to be checked. In step S706, 0 is written in the decoding input buffer 430 after the write address is incremented and the write signal is set to 1.

It is checked if there is no data input to the RF buffer 410 in step S707. If there is no input data, zero insertion is terminated. If there is input data, it is checked if CNT=0 in step S708. CNT is reset to 3 in step S710 in case of CNT=0 and CNT is decremented by 1 in step S709 in case of CNT#0, and then the process returns to step S701.

Zero insertion described above can be arranged in the form of a table as shown below.

**Table 1**

| E_val | CNT | R_ADDR | W_ADDR | Write | Write operation |
|---|---|---|---|---|---|
| >0 | >0 | +0 | ++ | 0 | No operation |
| >0 | =0 | ++ | ++ | 1 | Read data-write operation |
| <=0 | >0 | +0 | ++ | 1 | Zero insertion |
| <=0 | =0 | Not Avail. | Not Avail. | Not Avail. | X |

Next, a case where primary deinterleaving and data combining are performed will be described in detail. For convenience of explanation, data combining will be described for TTI=40ms, like in zero insertion.

Data combining according to the present invention may differ with a case where TTI>10ms, e.g., TTI=20ms, 40ms, or 80ms, and the current frame is a first radio frame, a case where TTI>10ms, e.g., TTI=20ms, 40ms, or 80ms, and the current frame is not the first radio frame, and a case where TTI=10ms, i.e., one physical radio frame exists in one TTI.

Thus, prior to data combining, the frame detector 492 of FIG. 4 determines whether the current frame is a first radio frame and there is one radio frame per TTI.

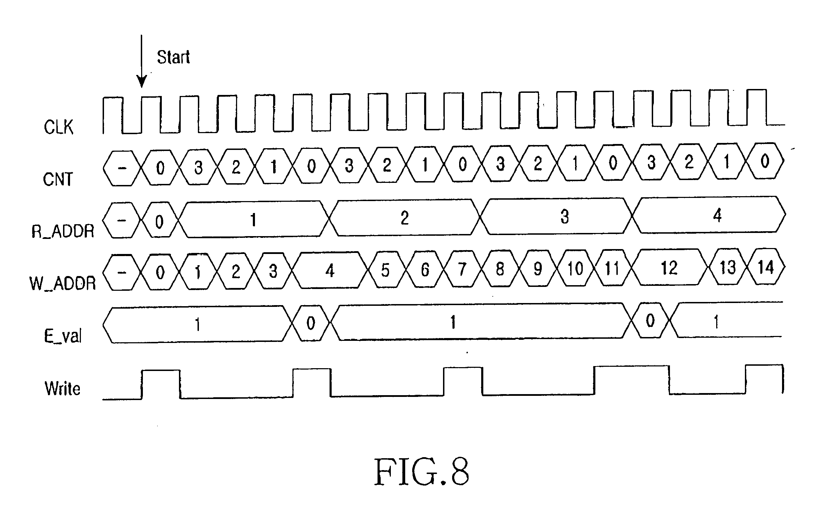

FIG. 8 is a timing diagram illustrating an operation for TTI=40ms and a first radio frame according to the present invention.

As illustrated in FIG. 8, in the first radio frame, the write signal WRITE is set to 1 when the output value CNT of the TTI counter 491 is 0 or the output value E_val of the rate dematcher 460 is less than 0. At this time, the controller 490 performs a control operation in such a way to not only read data of the radio frame and write the read data in the decoding input buffer 430 but also to previously write '0' in a position in which data combining is to be performed to prevent data combining with garbage data.

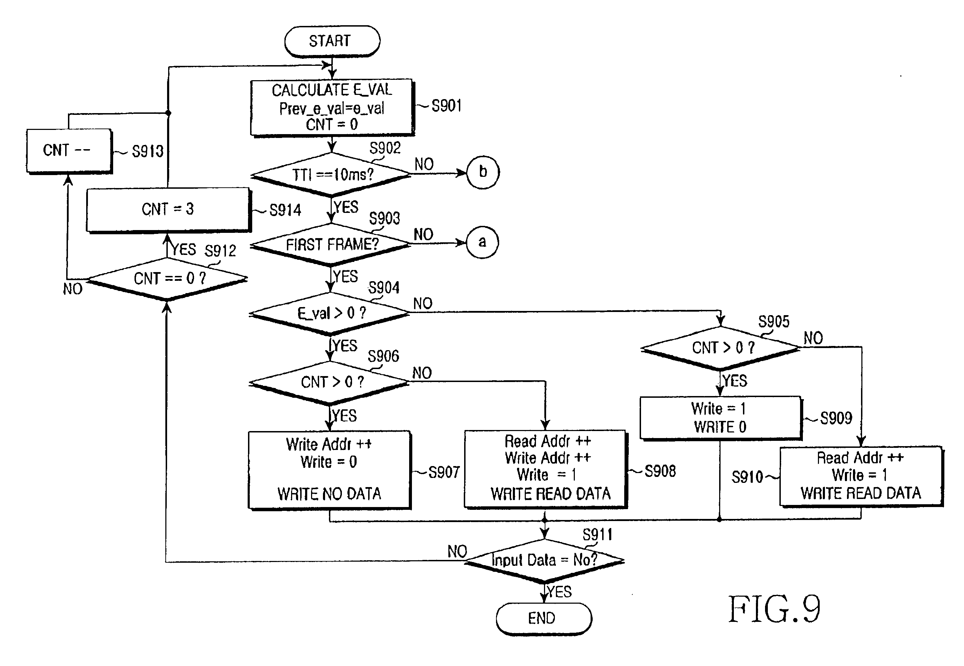

FIG. 9 is a flowchart illustrating an operation for TTI=40ms and a first radio frame according to the present invention.

As illustrated in FIG. 9, E_val is calculated, Pre_E_val is set to the same value as the calculated E_val, and CNT is set to 0 in step S901. It is checked if TTI=10ms in step S902. If so, the process goes to step (b) to be described later. If not, it is checked if the current data is first frame data in step S903. If not, the process goes to step (a) to be described later. If the current data is first frame data, E_val is checked in step S904. For E_val>0, CNT is checked in step S906. In case of CNT>0, the write address is incremented, the write signal is set to 0, and no write operation is performed in step S907. For CNT<=0, the read address and the write address are incremented, the write signal is set to 1, and the read data is written in step S908.

If E_val<=0 in step S904, CNT is checked in step S905. For CNT>0, the write signal is set to 1 and '0' is written in step S909. For CNT<=0, the read address is incremented, the write signal is set to 1, and read data is written in step S910.

Next, it is checked if there is no input data in step S911. If there is no input data, data combining is terminated. If there is input data, it is checked if CNT=0 in step S912. CNT is reset to 3 in case of CNT=0 in step S913 and CNT is decremented by 1 in case of CNT#0 in step S914, and then the process returns to step S901.

The operation described above can be arranged in the form of a table as shown below.

**Table 2**

| Prev_E_val | E_val | CNT | R_ADDR | W_ADDR | Write | Write operation |
|---|---|---|---|---|---|---|
| - | >0 | >0 | +0 | ++ | 0 | No operation |
| - | >0 | =0 | ++ | ++ | 1 | Read data-write operation |
| - | <=0 | >0 | +0 | +0 | 1 | Zero insertion |
| - | <=0 | =0 | ++ | +0 | 1 | Read data-write operation |

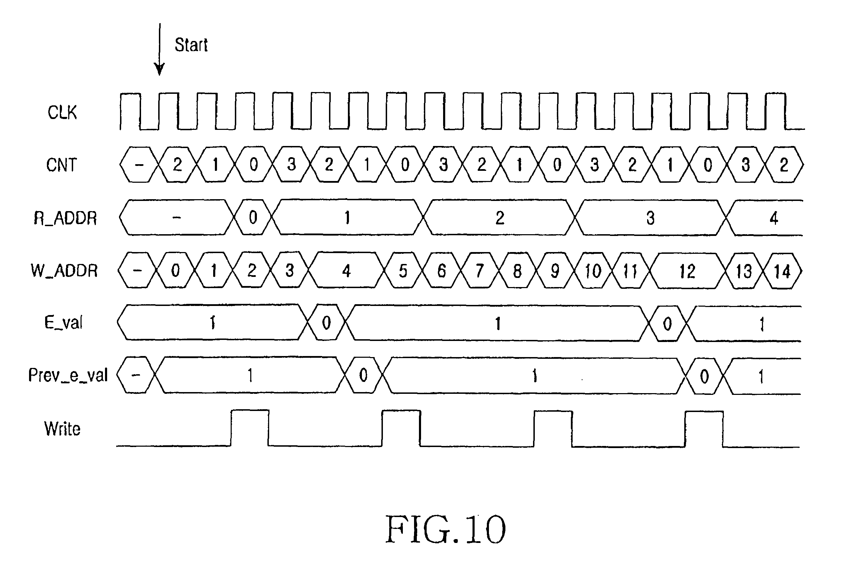

FIG. 10 is a timing diagram illustrating an operation for TTI=40ms and a radio frame following a first radio frame according to the present invention.

As illustrated in FIG. 10, for radio frames following the first radio frame, the write signal WRITE indicating the execution of a write operation in the decoding input buffer 430 is set to 1 only when CNT=0. In addition, for the radio frames following the first radio frame, the controller 490 illustrated in FIG. 4 operates based on Prev_E_val as well as E_val. In other words, the controller 490 enables data combining when any one of E_val and Prev_E_val is less than 0. For other cases, the controller 490 performs a control operation in such a way to store data read from the RF buffer 410 in the decoding input buffer 430.

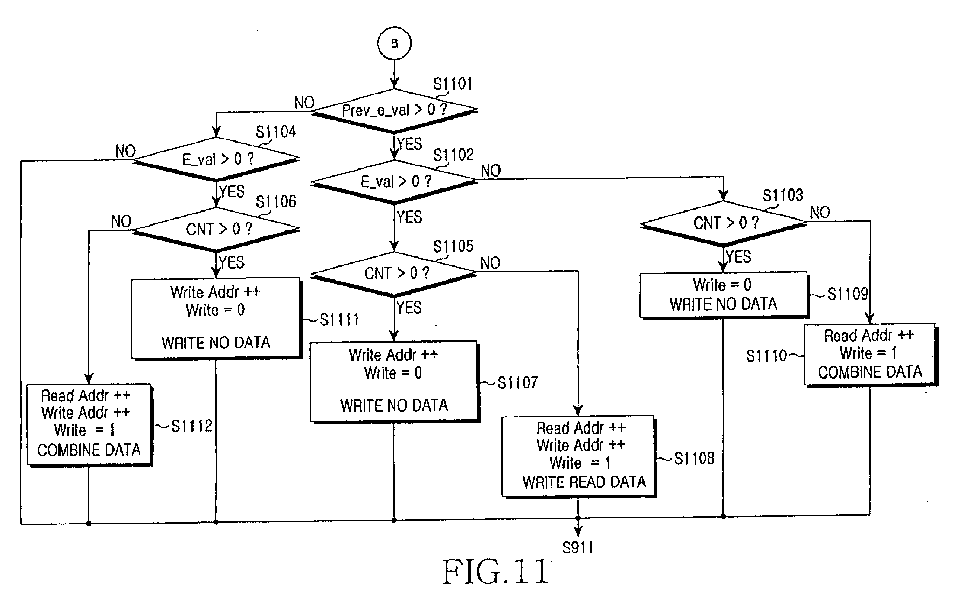

FIG. 11 is a flowchart illustrating an operation for TTI=40ms and a radio frame following a first radio frame according to the present invention.

As illustrated in FIG. 11, TTI is checked and it is checked if the current frame is a first radio frame in steps S901 through S903 of FIG. 9. If the current frame is not the first radio frame in step S903, Prev_E_val is checked in step S1101. For Prev_E_val>0, E_val is checked in step S1102. For E_val>0, CNT is checked in step S1105. In case of CNT>0, the write address is incremented, the write signal is set to 0, and no write operation is performed in step S1107. In case of CNT<=0, the read address and the write address are incremented, the write signal is set to 1, and read data is written in step S1108.

If E_val<=0 in step S 1102, CNT is checked in step S 1103. For CNT>0, the write signal is set to 0 and no write operation is performed in step S1109. For CNT<=0, the read address is incremented, the write signal is set to 1, and the read data is combined with previous data that is stored in the RF buffer 410 immediately before the read data, i.e., data combining is performed, in step S1110.

If Prev_E_val<=O in step S1101, E_val is checked in step S 1104. For E_val>0, CNT is checked in step S 1106. For CNT>0, the write address is incremented, the write signal is set to 0, and no write operation is performed in step S1111. For CNT<=0, the read address and the write address are incremented, the write signal is set to 1, and data combining is performed in step S 1112. If E_val<=0 in step S 1104, no operation is performed.

Thereafter, the process goes to step S911 of FIG. 9.

The operation discussed above can be arranged in the form of a table as shown below.

**Table 3**

| Prev_E_val | E_val | CNT | R_ADDR | W_ADDR | Write | Write operation |
|---|---|---|---|---|---|---|
| >0 | >0 | >0 | +0 | ++ | 0 | No operation |
| <=0 | >0 | >0 | +0 | ++ | 0 | No operation |
| >0 | <=0 | >0 | +0 | +0 | 0 | No operation |
| >0 | >0 | =0 | ++ | ++ | 1 | Read data-write operation |
| <=0 | >0 | =0 | ++ | ++ | 1 | Data combining |
| >0 | <=0 | =0 | ++ | +0 | 1 | Data combining |

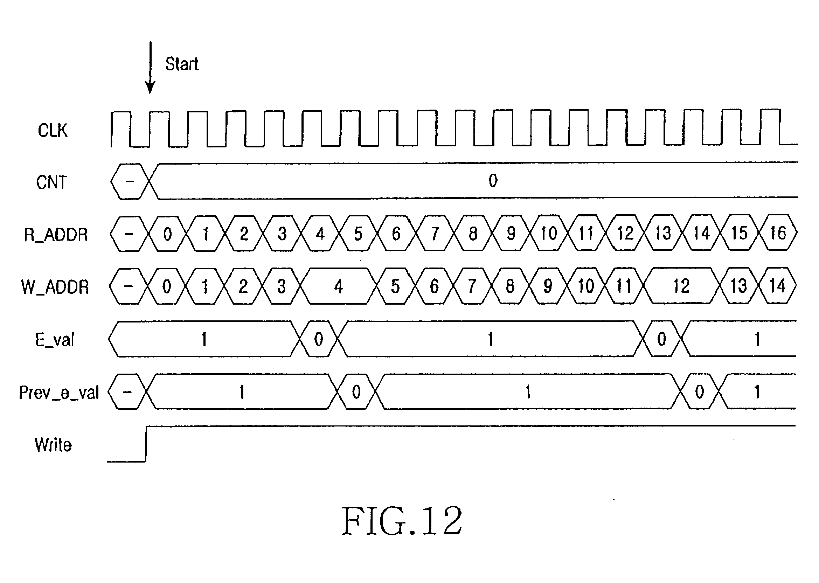

FIG. 12 is a timing diagram illustrating an operation for TTI=10ms according to the present invention.

As illustrated in FIG. 12, in case of TTI=10ms, the current frame is composed of a single radio frame and thus the transport channel demultiplexer according to the present invention operates similarly to a conventional transport channel demultiplexer including a transport channel buffer. In other words, for TTI=10ms, the output value CNT of the TTI counter 491 included in the controller 490 of FIG. 4 is 0 at all times and thus the write signal WRITE is 1 at all times. In this case, if Prev_E_val<0, the controller 490 performs a control operation in such a way to combine the read data with previous data that is stored in the RF buffer 410 immediately before the read data.

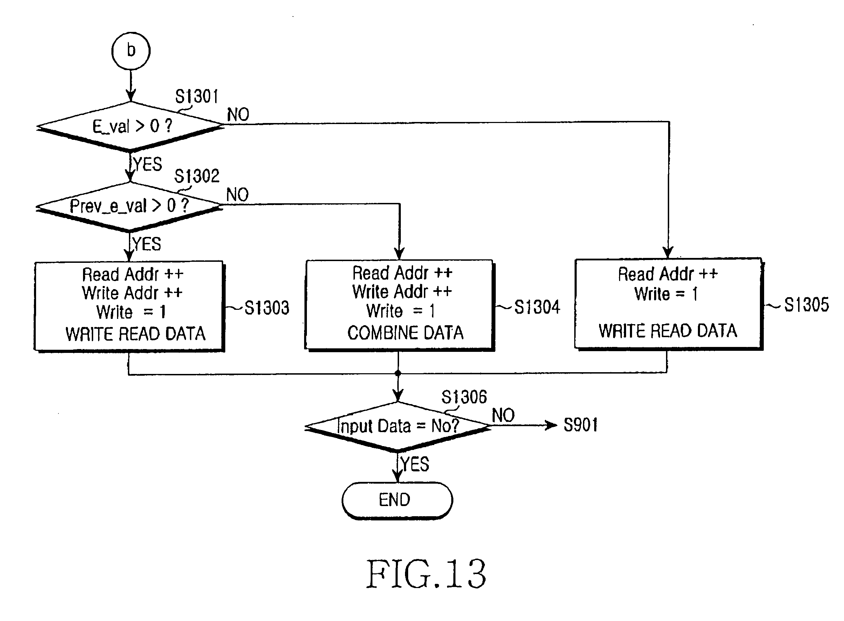

FIG. 13 is a flowchart illustrating an operation for TTI=10ms according to the present invention.

As illustrated in FIG. 13, steps S901 and S902 of FIG. 9 are performed and if TTI=10ms in step S902, E_val is checked in step S1301. For E_val>0, Prev_E_val is checked in step S1302. For Prev_E_val>0, the read address and the write address are incremented, the write signal is set to 1, and read data is written in step S1303. For Prev_E_val<=0, the read address and the write address are incremented, the write signal is set to 1, and data combining is performed in step S 1304.

If E_val<=0 in step S1301, the read address is incremented, the write signal is set to 1, and read data is written in step S 1305.

Next, it is checked if there is no input data in step S1306. If there is no input data, data combining is terminated. If there is input data, the process goes back to step S901 of FIG. 9.

The operation described above can be arranged in the form of a table as shown below.

**Table 4**

| Prev_E_val | E_val | CNT | R_ADDR | W_ADDR | Write | Write operation |
|---|---|---|---|---|---|---|
| >0 | >0 | =0 | ++ | ++ | 1 | Read data-write operation |
| <=0 | >0 | =0 | ++ | ++ | 1 | Data combining |
| >0 | <=0 | =0 | ++ | +0 | 1 | Read data-write operation |

According to the present invention, when a control logic including a TTI counter, a frame detector, and the like is assumed to have a size of 50 thousand gate, about 150 thousand gate can be reduced when compared to an intuitive structure in hardware implementation. In other words, significant memory reduction can be achieved with a small increase in the size of the control logic. Furthermore, by reducing an area with memory reduction, power consumption can also be reduced in chip implementation.

The above-described exemplary embodiment of the present invention can also be implemented by, without being limited to an apparatus and a method, a program for implementing functions corresponding to the present invention or a recording medium having the program recorded thereon. Such implementation can be easily construed as within the scope of the present invention by those skilled in the art to which the present invention pertains.

While the present invention has been shown and described with reference to a certain exemplary embodiment of the present invention thereof, it will be understood by those skilled in the art that various changes in form and details may be made therein without departing from the spirit and scope of the present invention as defined by the appended claims and their equivalents.

For example, although a demultiplexer for a WCDMA system is described in an exemplary embodiment of the present invention, the present invention can also be applied to an input/output data processor of a general communication system in a structure in which a controller is formed between two buffers having different transport timing intervals.

## Claims

1. A transport channel demultiplexer for a Wideband Code Division Multiple Access (WCDMA) system, the transport channel demultiplexer comprising:
a Radio Frequency (RF) buffer for storing radio frame data that is transmitted every first timing interval;
a rate dematching processor for performing rate dematching with respect to output data of the RF buffer;
a decoding input buffer having an output terminal connected to an input terminal of a decoder and for deinterleaving the rate dematched data that is processed by the rate dematching processor and then storing the deinterleaved data in unit of the first timing interval and outputting the stored data to the decoder in unit of the first timing interval or second timing interval that is greater by an integer multiple than the first timing interval; and
a controller for defining a counter according to the second timing interval and detecting data every first timing interval and then transmitting the detected data to the rate dematching processor.

2. The transport channel demultiplexer of claim 1, wherein the rate dematching processor comprises:
a rate dematcher for executing a rate dematching algorithm; and
a multiplexer for receiving the output data of the RF buffer, output data of the decoding input buffer, and a '0', and outputting one of them according to the control of the controller and the rate dematcher.

3. The transport channel demultiplexer of claim 1, wherein the controller comprises:
the counter for incrementing a count separately for each second timing interval; and
a frame detector for detecting the frame order of the radio frame data and the first timing interval.

4. The transport channel demultiplexer of claim 1, further comprising:
a first buffer controller for controlling an address of the RF buffer from which the radio frame data is to be read according to an output value of the counter; and
a second buffer controller for controlling an address of the decoding input buffer in which data is to be stored according to a first parameter generated by the rate dematching processor.

5. The transport channel demultiplexer of claim 1, wherein the decoding input buffer performs rate dematching and deinterleaving every 10ms.

6. The transport channel demultiplexer of claim 4, wherein the controller further comprises:
a first parameter calculator for calculating the first parameter; and
a second parameter calculator for calculating a second parameter by delaying the first parameter by one clock,
wherein the controller controls the multiplexer and the second buffer controller according to the first parameter, the second parameter, and the output value of the counter.

7. A demultiplexing method of a transport channel demultiplexer for a Wideband Code Division Multiple Access (WCDMA) system, the demultiplexing method comprising:
storing radio frame data that is transmitted every first timing interval after performing secondary deinterleaving with respect to the radio frame data;
performing rate dematching with respect to the stored radio frame data;
receiving the rate-dematched radio frame data and performing primary deinterleaving with respect to the received radio frame data, and storing the primary-deinterleaved radio frame data; and
outputting the stored primary-deinterleaved data to a decoder in unit of the first timing interval or second timing interval that is greater by an integer multiple than the first timing interval.

8. The demultiplexing method of claim 7, wherein performing rate dematching comprises at least one of outputting the secondary-deinterleaved data, outputting '0', and feeding back the stored primary-deinterleaved data.

9. The demultiplexing method of claim 7, wherein performing rate dematching comprises:
defining a counter according to the second timing interval; and
detecting a frame order of the radio frame data,
wherein the rate dematching is performed according to an output value of the counter and the frame order.

10. The demultiplexing method of claim 9, wherein performing rate dematching further comprises:
controlling an address from which the radio frame data is to be read according to the output value of the counter; and
controlling an address in which data that is input every second timing interval is to be stored according to a parameter generated by a rate dematching algorithm.

11. The demultiplexing method of claim 7, wherein the rate dematching and the primary deinterleaving are performed every first timing interval.
